# EUROPEAN PATENT SPECIFICATION

(11) **EP 2 492 998 B1**
(45) Date of publication and mention of the grant of the patent: **01.04.2015**
(21) Application number: 10824732.1
(22) Date of filing: 08.09.2010
(51) Int. Cl.: B01J 8/04, H01M 8/06, C01B 3/38, H01M 8/10, H01M 8/12, H01M 8/04, C01B 3/48

(54) **FUEL CELL SYSTEM**
BRENNSTOFFZELLENSYSTEM
SYSTÈME DE PILE À COMBUSTIBLE

(30) Priority: 19.10.2009 JP 2009240614; 19.10.2009 JP 2009240616; 19.10.2009 JP 2009240621; 30.10.2009 JP 2009250816
(43) Date of publication of application: 29.08.2012
(73) Proprietor: JX Nippon Oil & Energy Corporation, Chiyoda-ku Tokyo 100-8162 (JP)
(72) Inventor: FUJU, Akira, Ora-gun Gunma 370-0596 (JP); KAJITA, Takuya, Yokohama-shi Kanagawa 221-0021 (JP); NISHIMURA, Yoshinobu, Yokohama-shi Kanagawa 221-0021 (JP)
(74) Representative: Grünecker, Kinkeldey, Stockmair & Schwanhäusser
(86) International application number: PCT/JP2010/065422
(87) International publication number: WO 2011/048880

(56) References cited:
- EP-A2- 1 197 261
- WO-A1-02/25762
- JP-A- 10 040 942
- JP-A- 2002 187 705
- JP-A- 2004 288 434
- JP-A- 2004 288 434
- JP-A- 2006 169 013
- JP-A- 2007 308 318
- JP-A- 2008 115 058
- US-A1- 2006 107 594

## Description

### Technical Field

The present invention relates to a fuel cell system. A fuel cell system according to the preamble of claim 1 is known from US 2006/107594 A1.

### Background Art

A conventional fuel cell system is known to include a reformer for reforming raw fuel such as kerosene or liquefied petroleum gas using a burner to generate reformed gas containing hydrogen, a CO shift converter for converting carbon monoxide in the reformed gas generated by the reformer to reduce a carbon monoxide concentration in the reformed gas, and a CO remover for further reducing the carbon monoxide concentration, reduced by the CO shift converter, in the reformed gas (for example, see Patent Literature 1). In such a fuel cell system, a heater such as a sheathed heater is provided so as to surround the CO shift converter for the purpose of increasing the temperature of the CO shift converter by heating by the heater, for example, during system startup. In such a fuel cell system, in order to cool at least one of the CO shift converter and the CO remover, cooling instrument is provided for them.

### Citation List

### Patent Literature

Patent Literature 1: Japanese Patent Application Laid-Open Publication No. 2003-187848

### Summary of Invention

### Technical Problem

Here, while fuel cell systems have been increasingly popular among households in recent years, further cost reduction is strongly desired in the fuel cell system as described above. The present invention therefore aims to provide a fuel cell system reduced in cost.

In the fuel cell system as described above, further size reduction is also strongly desired. The present invention therefore aims to provide a fuel cell system reduced in size.

In the fuel cell system as described above, it is strongly desired to achieve higher efficiency of the system configuration and thus to achieve size reduction and cost reduction. The present invention therefore aims to provide a fuel cell system increased in efficiency of the system configuration.

In the fuel cell system as described above, it is requested to simplify the structure and to achieve cost reduction and improvement of reliability. The present invention therefore aims to provide a fuel cell system having a simplified structure.

### Solution to Problem

The aforementioned problem is solved in an inventive manner by a fuel cell system according to claim 1. A fuel cell system disclosed herein includes a reformer for reforming raw fuel using a burner to generate reformed gas, and a CO shift converter shaped like a tube provided integrally with the reformer such that the reformer is positioned in the tube, for reducing a carbon monoxide concentration in the reformed gas generated by the reformer. The CO shift converter is configured such that its temperature can be increased by exhaust gas from the burner.

In the fuel cell system, for example, during system startup, the CO shift converter can be heated by exhaust gas from the burner and increased in temperature. Therefore, it is not necessary to separately provide a heater such as a sheathed heater to increase the temperature of the CO shift converter, thereby reducing cost of the fuel cell system.

A channel is provided between the reformer and the CO shift converter , and the CO shift converter is, with exhaust gas from the burner flowed through the channel, increased in temperature. With such a configuration, the exhaust gas from the burner can suitably heat the CO shift converter. Therefore, the operation and effect of reducing cost of the fuel cell system can be achieved suitably.

A fuel cell system disclosed herein also includes a CO remover for selectively oxidizing carbon monoxide in the reformed gas to remove CO. The CO shift converter and the CO remover are configured such that its temperature can be increased by exhaust gas from the burner.

In the fuel cell system, for example, during system startup, the CO shift converter and the CO remover can be heated by exhaust gas from the burner and increased in temperature. Thus, the fuel cell system can be reduced in cost.

The channel is provided between the reformer and the CO shift converter and between the reformer and the CO remover, and the CO shift converter and the CO remover are, with exhaust gas from the burner flowed through the channel, increased in temperature. With such a configuration, the CO shift converter and the CO remover can be heated suitably by the exhaust gas from the burner. Thus, the operation and effect of reducing cost of the fuel cell system can be achieved suitably.

In the fuel cell system disclosed herein, the CO shift converter is shaped like a tube provided and integrally with the reformer such that the reformer is positioned in the tube, for reducing a carbon monoxide concentration in the reformed gas generated by the reformer, and the CO remover is also shaped like a tube and provided integrally with the reformer such that the reformer is positioned in the tube, for further reducing a carbon monoxide concentration, reduced by the CO shift converter, in the reformed gas.

In the fuel cell system, the CO shift converter is formed in a tubular shape so that the CO shift converter is integrated with the reformer. Moreover, the CO remover is also formed in a tubular shape so that the CO remover is integrated with the reformer. Thus, it is possible to save space for the fuel cell system. As a result, the fuel cell system can be reduced in size.

The CO shift converter and the CO remover may be arranged coaxially to each other and aligned in the axial direction. Here, the outer diameter of the CO shift converter and the outer diameter of the CO remover may be equal to each other. In these cases, it is possible to further save space for the fuel cell system thereby to further reduce the size of the fuel cell system.

The fuel cell system disclosed herein has a heat exchange unit for performing heat exchange between exhaust gas from the burner and water. At least part of a water channel in the heat exchange unit is configured to be capable of heat exchange with the reformed gas introduced to the CO shift converter.

In such a fuel cell system, water in the heat exchange unit that is heat-exchanged with the burner exhaust gas can be used to heat-exchange with the reformed gas introduced to the CO shift converter. In other words, water flowed in such a heat exchange unit is used both for heat exchange with the exhaust gas and for heat exchange with the reformed gas. As a result, it is possible to achieve higher efficiency of the system configuration.

The fuel cell system disclosed herein has a bypass channel connected to the water channel to allow water to bypass so as not to flow into the heat exchange unit during system startup. During system startup, it is desirable that the temperature of the reformed gas introduced to the CO shift converter should be relatively high in order to increase the temperature of the CO shift converter. In this respect, when a bypass channel is provided as described above, the bypass channel allows water to bypass during system startup, thereby suppressing heat exchange between water and reformed gas (that is, cooling the reformed gas) which is performed in the heat exchange unit. Thus, it is possible to keep the temperature of the reformed gas from dropping.

In the fuel cell system disclosed herein, a cooling instrument for cooling at least one of the CO shift converter and the CO remover is preferably provided. The cooling instrument may be a cooling jacket provided to surround at least one of the CO shift converter and the CO remover.

In such a fuel cell system, a cooling jacket is used as cooling instrument. Therefore, when compared with using a cooling coil as cooling instrument (that is, a cooling structure in which liquid is flowed in a tube formed like a coil for cooling), the cooling structure in the fuel cell system can be simplified. As a result, the structure of the fuel cell system can be simplified.

The CO remover is shaped like a tube and provided integrally with the reformer such that the reformer is positioned in the tube. In this case, the reformer, the CO shift converter, the CO remover, and the cooling instrument are integrally formed, thereby reducing the size of the fuel cell system.

Preferably, a partition is provided in the cooling instrument such that a plurality of sections are designed and the plurality of sections are at least arranged at positions corresponding to an introduction-side portion and an exhaust-side portion for the reformed gas in at least one of the CO shift converter and the CO remover. In this case, a cooling medium such as coolant water can be stayed in the plurality of sections. As a result, it becomes possible to suitably cool the introduction-side portion and the exhaust-side portion that particularly require cooling.

Here, preferably, the cooling instrument is such that a cooling medium is introduced from an upper side thereof and exhausted from a lower side thereof and the plurality of sections are arranged adjacent to each other along an up/down direction and are connected to each other through a gap having a prescribed size that prevents liquid from dropping under its surface tension. In this case, in each section, the cooling medium in a liquid state is stayed to cool at least one of the CO shift converter and the CO remover, and the cooling medium is heated by heat exchange and vaporized is flowed to the following stage through the gap. Therefore, at least one of the CO shift converter and the CO remover can be cooled even more suitably.

### Advantageous Effects of Invention

According to the present invention, the fuel cell system can be reduced in cost. In addition, according to the present invention, the fuel cell system can be reduced in size. According to the present invention, the system configuration can be increased in efficiency. According to the present invention, the structure of the fuel cell system can be simplified.

### Brief Description of Drawings

FIG. 1 is a block diagram showing a fuel cell system according to a first embodiment of the present invention.
FIG. 2 is a schematic front view showing an FPS of the fuel cell system in FIG. 1.
FIG. 3 is a schematic front view with the FPS in FIG. 2 partially cut away.
FIG. 4 is a diagram showing a process flow of the FPS in FIG. 2.
FIG. 5 is a plan view showing a dispersion plate of the FPS in FIG. 2.
FIG. 6 is a schematic front view with the FPS in FIG. 2 in another example partially cut away.
FIG. 7 is a schematic enlarged front view of a periphery of a reformed gas introduction portion of the FPS in FIG. 3.
FIG. 8 is a schematic cross-sectional view showing a cooling jacket of the FPS in FIG. 2.
FIG. 9(a) is a schematic cross-sectional view showing another example of the cooling jacket of the FPS in FIG. 2, and FIG. 9(b) is a schematic cross-sectional view showing yet another example of the cooling jacket of the FPS in FIG. 2.
FIG. 10 is a diagram showing a process flow in yet another example of the FPS in FIG. 2.
FIG. 11 is a schematic front view with the FPS partially cut away in the fuel cell system according to not forming part of the present invention.
FIG. 12 is a diagram showing a process flow of the FPS in FIG. 11.

### Description of Embodiments

In the following, a suitable embodiment of the present invention will be described in detail with reference to the drawings. In the following description, the same or equivalent elements are denoted with the same reference numerals, and an overlapping description will be omitted. The terms "up" and "down" correspond to the up and down directions in the vertical direction.

### [First Embodiment]

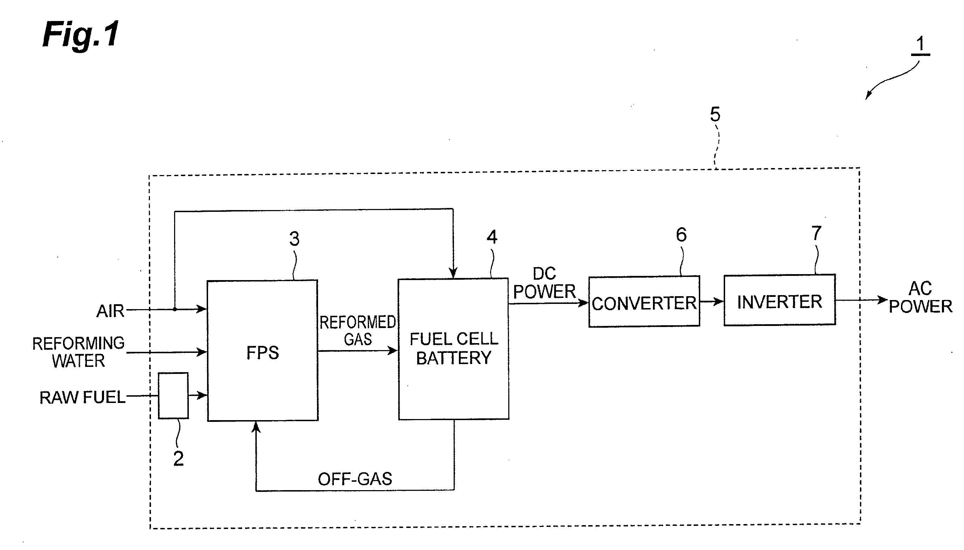

First, a first embodiment of the present invention will be described. FIG. 1 is a block diagram showing a fuel cell system according to the first embodiment of the present invention. As shown in FIG. 1, the fuel cell system 1 includes a desulfurizer 2, an FPS (fuel processing system) 3, and a fuel cell 4, which are packaged in a casing 5. This fuel cell system 1 is used as a home-use electric power supply, and liquefied petroleum gas (LPG) is used as raw fuel.

Desulfurizer 2 performs desulfurization on the raw fuel introduced (flowing in) from the outside using a desulfurization catalyst to remove sulfur components and supplies the raw fuel, having the sulfur components removed therefrom, to the FPS 3. The FPS 3 generates reformed gas from raw fuel and reforming water (water) and supplies the generated reformed gas to the fuel cell 4. The FPS 3 generates reformed gas using off-gas that is not used in the fuel cell 4 (residual gas that is not used in reaction since only hydrogen is consumed in the fuel cell 4).

The fuel cell 4 is configured as a stack structure in which a plurality of cells are stacked. Each battery cell has an anode, a cathode, and a polymer membrane arranged therebetween. In each battery cell of the fuel cell 4, an electrochemical reaction occurs between hydrogen in the reformed gas supplied to the anode and oxygen in the air supplied to the cathode to generate DC power. The electric power generated in the fuel cell 4 is supplied to the home through a converter 6 and an inverter 7. The converter 6 transforms the DC power, and the inverter 7 converts the transformed electric power to AC power.

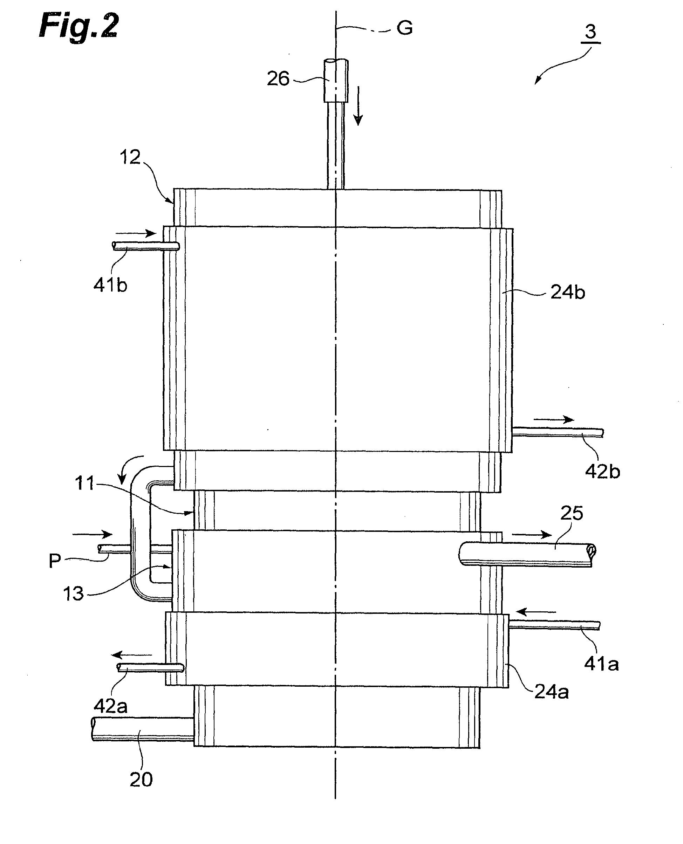

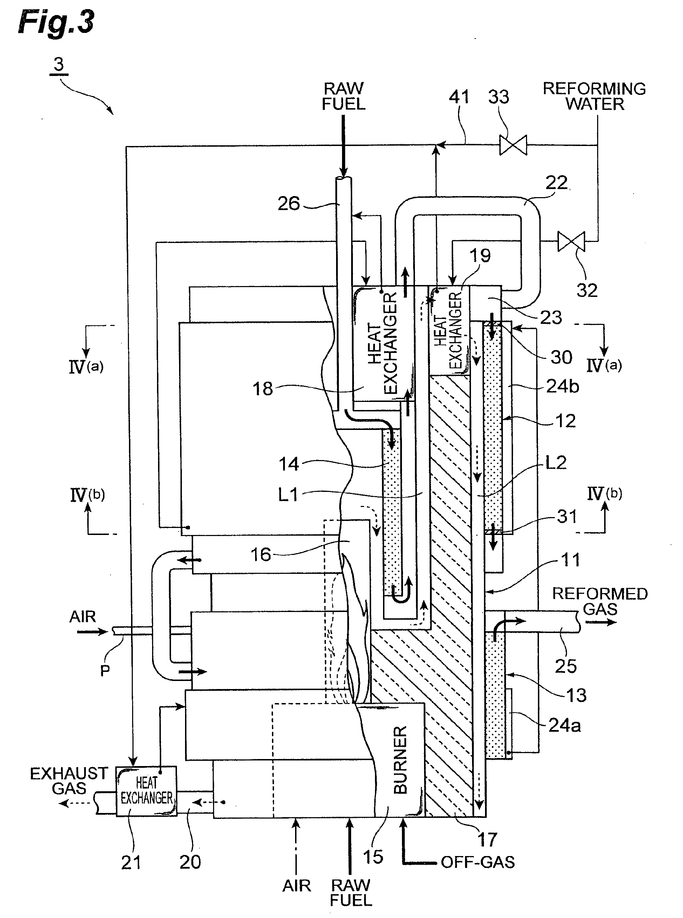

FIG. 2 is a schematic front view showing the FPS of the fuel cell system in FIG. 1, and FIG 3 is a schematic front view with the FPS in FIG. 2 partially cut away. As shown in FIG. 2 and FIG. 3, the FPS 3 includes a reformer 11, a CO shift converter 12, and a CO remover 13, and is integrally configured with them.

The reformer 11 has a cylindrical appearance with an axis G serving as a center axis and has a reforming catalyst bed 14 for steam-reforming raw fuel and a burner 15 as a heat source for heating the reforming catalyst bed 14. The reformer 11 generates reformed gas containing hydrogen and supplies the generated reformed gas to the CO shift converter 12.

The burner 15 is disposed at a lower end portion of the reformer 11. A tubular combustion tube 16 having the axis G as the center axis is arranged at an upper end portion of the burner 15 to surround flames generated by the burner 15. The reforming catalyst bed 14 is shaped like a tube having the axis G as the center axis and is disposed radially outside of the combustion tube 16 at the axially central portion of the reformer 11.

A heat insulator 17 is provided radially outside of the burner 15, the combustion tube 16, and the reforming catalyst bed 14 so as to cover them. A heat exchanger 18 is disposed above the reforming catalyst bed 14 of the reformer 11 to perform heat exchange between the reformed gas introduced from the reforming catalyst bed 14 and reforming water. A heat exchanger (heat exchange unit) 19 is disposed above the heat insulator 17 to perform heat exchange between exhaust gas from the burner 15 (hereinafter simply called to as "exhaust gas") and reforming water.

The reformer 11 has a channel L1 passing through between the combustion tube 16 and the reforming catalyst bed 14 and passing through between the reforming catalyst bed 14 and the heat exchanger 18 and the heat insulator 17 and the heat exchanger 19. The channel L1 allows the exhaust gas exhausted from the combustion tube 16 to circulate to the heat exchanger 19. In addition, the reformer 11 has a channel L2 extending up and down radially outside of the heat insulator 17 and the heat exchanger 19. The channel L2 allows the exhaust gas exhausted from the heat exchanger 19 to circulate through piping 20 to the heat exchanger 21 which performs heat exchange between the exhaust gas and the reforming water.

The CO shift converter 12 is shaped like a tube having the axis G as the center axis and is provided integrally with the reformer 11 such that the reformer 11 is positioned in the tube. The CO shift converter 12 is disposed to surround a portion extending from the axially central portion to the proximity of the upper end portion of the outer circumference of the reformer 11. In order to reduce a carbon monoxide concentration (CO concentration) in the reformed gas supplied from the reformer 11, the CO shift converter 12 converts carbon monoxide included in the reformed gas into hydrogen and carbon dioxide through hydrogen shift reaction. Then, the CO shift converter 12 supplies the reformed gas having a reduced carbon monoxide concentration to the CO remover 13.

A dispersion plate 30 is provided at a reformed gas inlet at the upper portion of the CO shift converter 12. On the other hand, a dispersion plate 31 is provided at a reformed gas outlet at the lower portion thereof. Thus, the flow rate of the reformed gas introduced to/exhausted from the CO shift converter 12 is controlled.

In an upper space of the CO shift converter 12, a reformed gas introduction portion 23 connected to the heat exchanger 18 through piping 22 is provided as a space for introducing the reformed gas to the CO shift converter 12. The reformed gas introduction portion 23 is thermally in contact with part of a channel for the reforming water of the heat exchanger 19, whereby heat exchange can be performed between the reformed gas and the reforming water.

The CO remover 13 is shaped like a tube having the axis G as the center axis and is provided integrally with the reformer 11 such that the reformer 11 is positioned inside the tube. The CO remover 13 is disposed to surround a portion extending from the axially central portion to the proximity of the lower end portion of the outer circumference of the reformer 11. In order to further reduce the carbon monoxide concentration in the reformed gas, the CO remover 13 reacts carbon monoxide included in the reformed gas with the air introduced from an introduction pipe P for selective oxidization and conversion into carbon dioxide. Then, the CO remover 13 supplies the reformed gas, having a carbon monoxide concentration further reduced, to the fuel cell 4 at the following stage.

The FPS 3 additionally includes cylindrical cooling jackets 24a and 24b which are provided to surround the outer circumference of the CO shift converter 12 and the outer circumference of the CO remover 13, as a cooling instrument for cooling the CO shift converter 12 and the CO remover 13. The cooling jacket 24a allows the reforming water (cooling medium) introduced from the heat exchanger 21 to circulate through the inside thereof and thereafter exhausts the reforming water to the cooling jacket 24b. The cooling jacket 24b allows the reforming water introduced from the cooling jacket 24a to circulate through the inside thereof and exhausts the reforming water to the heat exchanger 18.

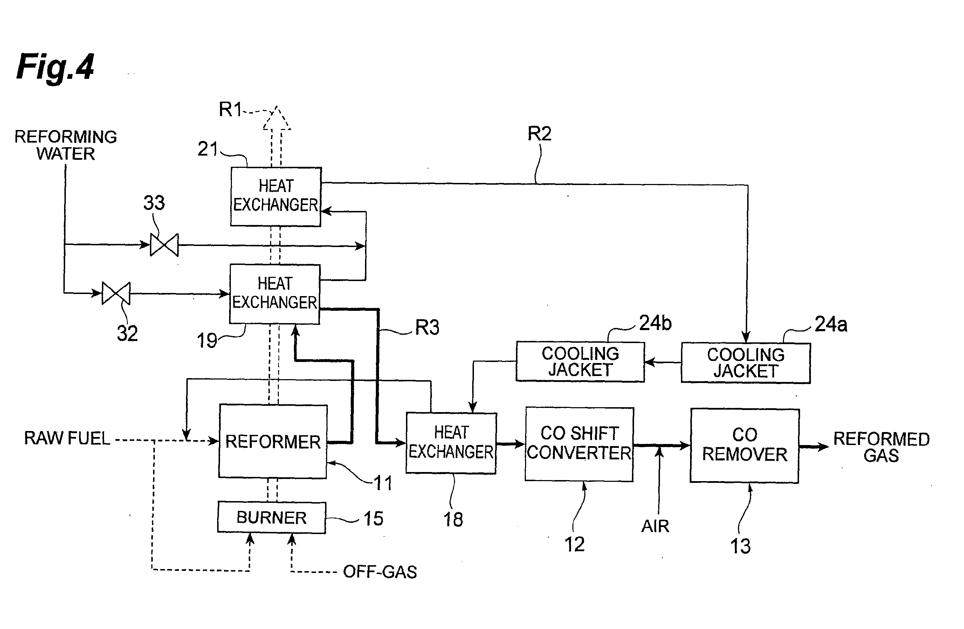

FIG. 4 is a diagram showing a process flow of the FPS in FIG 2. As shown in FIG. 3 and FIG. 4, in the FPS 3, the air and raw fuel or off-gas are supplied to the burner 15 for combustion. This combustion heats the reforming catalyst bed 14. Exhaust gas R1 from the burner 15 circulates through the channel L1 and is introduced to the heat exchanger 19 to be cooled.

The exhaust gas R1 exhausted from the heat exchanger 19 circulates through the channel L2 to heat and increase the temperature of the CO shift converter 12 and the CO remover 13. Then, the exhaust gas R1 is introduced to the heat exchanger 21 through the piping 20 to be cooled and is thereafter discharged to the outside of the FPS 3.

Concurrently, when a valve 32 is "open" and a valve 33 is "closed," reforming water R2 is heated by the exhaust gas R1 in the heat exchanger 19. This reforming water R2 is introduced into the heat exchanger 21 and further heated by the exhaust gas R1. Here, part of the channel for the reforming water R2 is in contact with the reformed gas introduction portion 23 in the heat exchanger 19 as described above. Thus, the reforming water R2 is also heated by the reformed gas R3 (the reformed gas R3 is cooled by the reforming water R2). On the other hand, when the valve 32 is "closed" and the valve 33 is "open," the reforming water R2 is introduced to the heat exchanger 21 as it is and is heated by the exhaust gas R1.

The reforming water R2 exhausted from the heat exchanger 21 circulates through the cooling jackets 24a and 24b in this order and is heated by the CO remover 13 and the CO shift converter 12 (cools the CO remover 13 and the CO shift converter 12). Thereafter, the reforming water R2 is introduced to the heat exchanger 18 and heated by the reformed gas R3. Then, the reforming water R2 is introduced to piping 26 and mixed into raw fuel in a state in which it is finally vaporized into steam.

In addition to the foregoing, the raw fuel is introduced from above into the reformer 11 through the piping 26, and the reforming water R2 which is vaporized is mixed into this raw fuel from the heat exchanger 18. Then, the raw fuel including steam is steam-reformed by the reforming catalyst bed 14 heated by the burner 15 and is introduced as the reformed gas R3 to the heat exchanger 18.

The reformed gas R3 introduced to the heat exchanger 18 is cooled by the reforming water R2 and is thereafter introduced to the CO shift converter 12 through the piping 22 and the reformed gas introduction portion 23. Here, in the reformed gas introduction portion 23, the reformed gas R3 is also cooled by the reforming water R2 circulating in the heat exchanger 19. Then, the reformed gas R3 has its carbon monoxide concentration reduced by the CO shift converter 12, for example, to about a few tens of percent and reacts with the air introduced from the introduction pipe P by the CO remover 13, so that the carbon monoxide concentration is reduced to 10 ppm or lower. Thereafter, the reformed gas R3 is supplied to the fuel cell 4 at the following stage through piping 25.

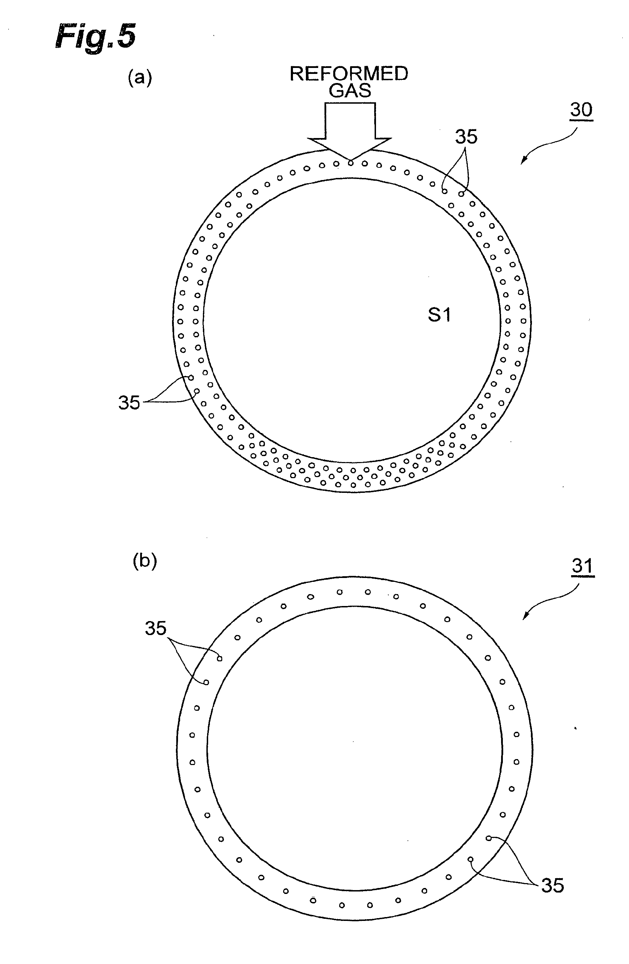

FIG. 5 is a plan view showing the dispersion plate of the FPS in FIG. 2. As shown in FIG 5, the dispersion plates 30 and 31 are annularly-shaped, perforated metal, for example, having a plurality of through holes 35. The dispersion plates 30 and 31 control the gas flow rate of the reformed gas R3 circulating through the CO shift converter 12 as desired by setting the number and position of the through holes 35 as appropriate and disperse the reformed gas R3 in the circumferential direction as desired.

Here, the number of through holes 35 of the dispersion plate 30 on the inlet side is greater than the number of through holes 35 of the dispersion plate 31 on the outlet side. In the dispersion plate 30, the number of through holes 35 on the side (the upper side in the drawing) from which the reformed gas R3 flows in is smaller than that on the opposite side (the lower side in the drawing). Such dispersion plates 30 and 31 prevent disproportion of the reformed gas R3 in the CO shift converter 12 to ensure that the shift reaction occurs, thereby efficiently reducing the carbon monoxide concentration in the reformed gas R3.

In general, during startup of the fuel cell system 1, it is necessary to increase the temperatures of the CO shift converter 12 and the CO remover 13. For example, the temperature of the CO shift converter 12 may be increased to 200°C to 300°C, and the temperature of the CO remover 13 may be increased to 150°C to 180°C. Therefore, in the conventional fuel cell system, generally, a heater such as a sheathed heater is separately provided around the CO shift converter 12 and the CO remover 13.

In this respect, in the present embodiment, the channel L2 is provided between the reformer 11 and the CO shift converter 12 and the CO remover 13 as described above. The exhaust gas R1 from the burner 15 circulates through this channel L2. Specifically, as shown in FIG. 3, the channel L2 extends straight from one end to the other end in the up/down direction of the reformer 11, in adjacent to the inner circumferential surfaces of the CO shift converter 12 and the CO remover 13. Accordingly, the CO shift converter 12 and the CO remover 13 are suitably heated (heat exchange) from the inside thereof by the exhaust gas.

Therefore, according to the present embodiment, the exhaust gas from the burner 15 heats the CO shift converter 12 and the CO remover 13 and increases their temperatures, thereby eliminating the need for a heater for increasing their temperatures. As a result, the fuel cell system 1 can be reduced in cost.

Conventionally, the reformed gas R3 introduced from the reforming catalyst bed 14 to the CO shift converter 12 has to be once flowed in a space (volume) or the like in order to suppress its pulsation. Therefore, for example, the reformed gas R3 may be flowed through the channel L2. By contrast, in this embodiment, the exhaust gas R1 is flowed through the channel L2 in order to increase the temperatures of the CO shift converter 12 and the CO remover 13 as described above. The exhaust gas R1 may be flowed through the channel L2 in this manner in the present embodiment, because of the following reason, for example.

In the present embodiment, since the dispersion plates 30 and 31 are provided for the CO shift converter 12, the gas flow rate of the reformed gas R3 introduced to/exhausted from the CO shift converter 12 can be controlled and suitably dispersed. Therefore, the necessity for suppressing the pulsation of the reformed gas R3 from the reforming catalyst bed 14 is low, and the reformed gas R3 can be directly introduced to the CO shift converter 12.

Here, in the present embodiment, the CO shift converter 12 and the CO remover 13 are formed integrally on the outer circumferential surface of the reformer 11 as described above. As shown in FIG. 2, the CO shift converter 12 and the CO remover 13 are arranged coaxially and in alignment in the axial direction, and the outer diameters thereof are approximately equal to each other.

In this manner, in the present embodiment, the CO shift converter 12 is formed in a tubular shape so that the CO shift converter 12 is integrated with the reformer 11. In addition, the CO remover 13 is also formed in a tubular shape so that the CO remover 13 is integrated with the reformer 11. Therefore, it is possible to save space for the fuel cell system 1, resulting in size reduction of the fuel cell system 1.

As described above, the CO shift converter 12 and the CO remover 13 are arranged coaxially to each other and in alignment in the axial direction. Furthermore, the outer diameter of the CO shift converter 12 and the outer diameter of the CO remover 13 are equal to each other. Thus, it is possible to further save space for the fuel cell system 1, resulting in size reduction of the fuel cell system 1.

In the CO remover 13 in the present embodiment, the design durability is improved as compared with the conventional ones and is equal to or longer than the design durability of the reformer 11. This is because the performance of the CO shift converter 12 is improved, and the CO concentration in the reformed gas can be sufficiently reduced (to 0.5% or lower) by the CO shift converter 12, so that the catalyst degradation of the CO remover 13 is reduced. In addition, the durability of catalyst is improved in the CO remover 13 itself.

With the integrated reformer 11 and CO remover 13, for example, when the CO remover 13 is to be replaced due to degradation of the CO removing catalyst of the CO remover 13, there is concern that the replacement may be complicated. In this respect, in the present embodiment, the design durability of the CO remover 13 is equal to or longer than the design durability of the reformer 11 as described above, which makes the operations of replacing the CO remover 13 less frequent and thus avoids such concern.

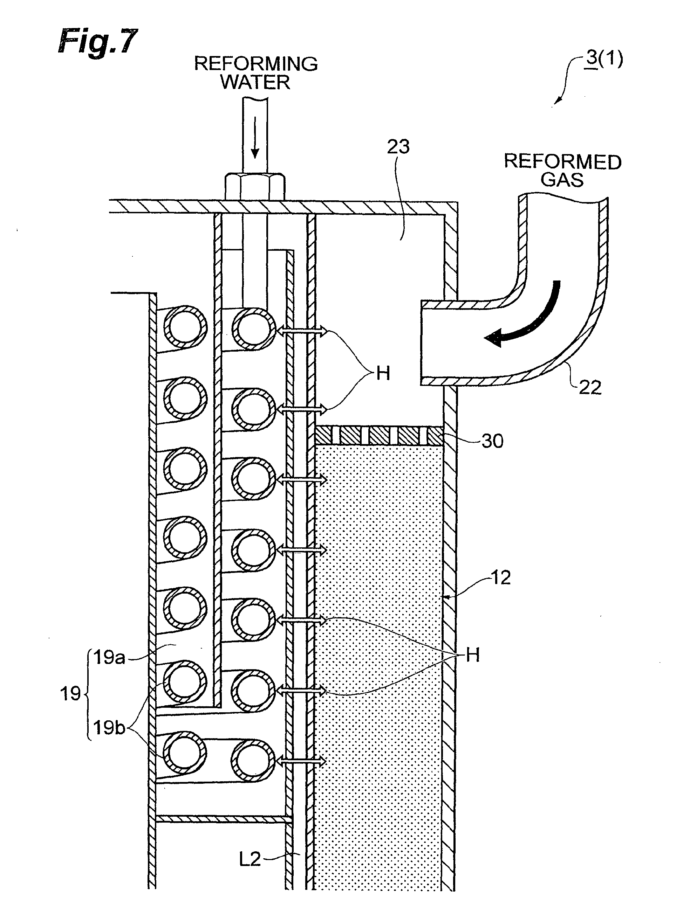

FIG. 7 is a schematic enlarged front view of the periphery of the reformed gas introduction portion of the FPS in FIG. 2. As shown in FIG. 7, in the FPS 3, the reformed gas introduction portion 23 is disposed as a space for introducing the reformed gas to the CO shift converter 12 as described above.

The reformed gas introduction portion 23 is positioned on the upper side (the reformed gas inlet side) of the CO shift converter 12. The reformed gas introduction portion 23 and part of the CO shift converter 12 are provided adjacent to the heat exchanger 19 provided at the upper portion of the FPS 3. The heat exchanger 19 includes an exhaust gas channel 19a extending up and down for circulating the exhaust gas R1 in a back-and-forth manner, and a coil pipe (water channel) 19b provided on the exhaust gas channel 19a for circulating the reforming water R2.

In the heat exchanger 19 in this manner, at least part of the coil pipe 19b is configured to allow heat exchange with the CO shift converter 12 and the reformed gas introduction portion 23, which is a flow-in channel for the reformed gas R3 to flow into the CO shift converter 12. In other words, the reformed gas introduction portion 23 and the coil pipe 19b are arranged in proximity to each other so as to be thermally in contact with each other, and the CO shift converter 12 and the coil pipe 19b are arranged in proximity with each other so as to be thermally in contact with each other.

In the present embodiment described above, for example, during normal operation, the valve 32 is "open" and the valve 33 is "closed." Thus, the reforming water R2 circulates through the coil pipe 19b of the heat exchanger 19, so that heat exchange is performed between the exhaust gas R1 and the reforming water R2.

In addition, the reforming water R2 circulating through the coil pipe 19b exchanges heat with the reformed gas R3 introduced to the reformed gas introduction portion 23 and is heated by the reformed gas R3. The reforming water R2 circulating through the coil pipe 19b exchanges heat with the CO shift converter 12 (in particular, the CO shift-converting catalyst) and is heated by the CO shift converter 12. More specifically, the reformed gas R3 introduced to the reformed gas introduction portion 23 and the CO shift converter 12 are cooled by the reforming water R2 circulating through the coil pipe 19b (the arrow H in the drawing).

On the other hand, during system startup, the valve 32 is "closed" and the valve 33 is "open." Thus, the reforming water R2 is bypassed to a bypass channel 41 (see FIG. 3) so that the reforming water R2 does not flow into the heat exchanger 19, and the reforming water R2 is introduced to the heat exchanger 21 as it is. As a result, heat exchange between the reforming water R2 in the coil pipe 19b and the reforming gas R3 is suppressed so that the reformed gas R3 is prevented from being cooled. Therefore, the temperature of the reformed gas R3 is maintained so as not be reduced.

Therefore, in the present embodiment, the reforming water R2 which exchanges heat with the exhaust gas R1 in the heat exchanger 19 can be used to exchange heat with the reformed gas R3 introduced to the CO shift converter 12 thereby cooling the reformed gas R3 (the arrow H). In other words, the reforming water R2 circulating through such a heat exchanger 19 can be used both for heat exchange with the exhaust gas R1 and for heat exchange with the reformed gas R3. As a result, higher efficiency of the system configuration can be achieved. Specifically, in the fuel cell system 1, the system can be configured with the increased efficiency of heat exchange and with minimized loss. In the present embodiment, the reforming water R2 of the heat exchanger 19 can also cool the CO shift converter 12 itself, thereby achieving even higher efficiency of the system configuration.

In general, during system startup, the temperature of the CO shift converter 12 is increased. Therefore, it is desirable that the temperature of the reformed gas R3 flowing into the CO shift converter 12 should be relatively high. In this respect, in the present embodiment, during system startup, the reforming water R2 is bypassed through the bypass channel 41 and introduced as it is to the heat exchanger 21 as described above. Thus, during system startup, a temperature drop of the reformed gas R3 introduced to the CO shift converter 12 can be suppressed, thereby improving the startup performance.

Here, in the present embodiment, the cooling jackets 24a and 24b are provided, which are jacket-type heat exchangers for cooling the CO shift converter 12 and the CO remover 13 as described above. As shown in FIG. 2, the cooling jackets 24a and 24b allow reforming water to pass through the interior space thereof to cool the CO shift converter 12 and the CO remover 13, respectively. Here, the cooling jackets 24a and 24b have the outer diameters equal to each other.

The cooling jacket 24a abuts on the outer circumferential surface of the CO remover 13 so as to cover a region extending from the lower end to the central portion thereof. In other words, the cooling jacket 24a is configured such that at least part of the outer wall of the CO remover 13 is double-layered. The cooling jacket 24a has an introduction pipe 41a at the upper portion thereof (upper side) such that the reforming water is introduced from the introduction pipe 41 a. The cooling jacket 24a also has an exhaust pipe 42a at the lower portion (lower side) on the side approximately opposite to the introduction pipe 41a with the axis G interposed therebetween such that reforming water is exhausted from the exhaust pipe 42a.

The cooling jacket 24b is provided to cover a region excluding the upper end portion and the lower end portion of the outer circumferential surface of the CO shift converter 12. In other words, the cooling jacket 24b is configured such that at least part of the outer wall of the CO shift converter 12 is double-layered. The cooling jacket 24b also has an introduction pipe 41b at the upper portion thereof so that the reforming water is introduced from the introduction pipe 41 b. The cooling jacket 24b has an exhaust pipe 42b at the lower portion thereof on the side approximately opposite to the introduction pipe 41 b with the axis G interposed therebetween so that the reforming water is exhausted from the exhaust pipe 42b.

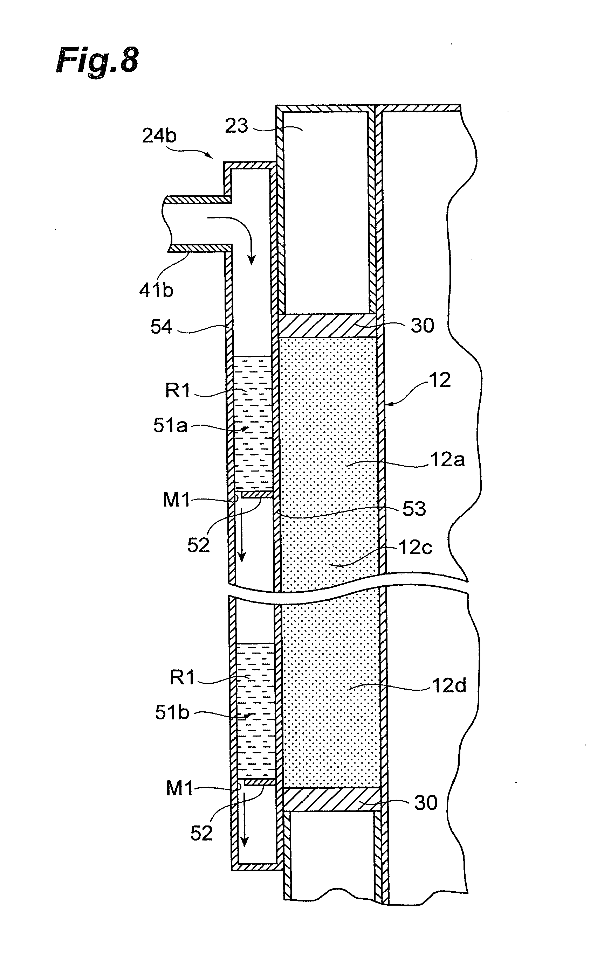

FIG. 8 is a schematic cross-sectional view showing the cooling jacket 24b of the FPS 3 in FIG. 2. As shown in FIG. 8, partitions 52 are provided in the cooling jacket 24b in the present embodiment to design first and second sections 51a and 51b. More specifically, the first and second sections 51a and 51b, which are rooms arranged adjacent to each other along the up/down direction (vertical direction), are divided by the partitions 52 in the cooling jacket 24b.

The first section 51a is arranged at a position corresponding to the introduction-side portion for the reformed gas of the CO shift converter 12. In other words, it is disposed in proximity to the reformed gas inlet portion 12a of the CO shift converter 12. The second section 51b is arranged at a position corresponding to the exhaust-side portion for the reformed gas of the CO shift converter 12. In other words, it is disposed in proximity to the reformed gas outlet portion 12b of the CO shift converter 12.

The partition 52 is shaped like an annular plate and is provided on an inner wall 53 radially inside of the cooling jacket 24b. A gap M1 having a prescribed width (a prescribed size) is formed between an outer wall 54 radially outside of the jacket 24b and an end portion radially outside of the partition 52. In other words, the first and second sections 51a and 51b are in communication with each other (connected) through the gap M1 which is annularly open. The prescribed width is such a width that prevents liquid from dropping under its surface tension, preferably, for example, 0.5 mm or less. Here, more preferably, the prescribed width is 0.01 mm or more and 0.5 mm or less.

In the cooling jacket 24b configured in this manner, the reforming water R2 introduced from the introduction pipe 41b is stayed (stored) in the upper, first section 51a. Here, the gap M1 is formed between the partition 52 and the outer wall 54 but has a prescribed width that prevents liquid from dropping only under its surface tension as described above. Therefore, the reforming water R2 in a liquid state does not flow down but is stored. Then, the reformed gas inlet portion 12a of the CO shift converter 12 is cooled by the stayed reforming water R2, and the reforming water R2 is heated by heat exchange is vaporized into steam. In addition, such vaporization increases the internal pressure in the first section 51a. Accordingly, the steam passes through the gap M1 together with part of the reforming water R2 and circulates downward.

Then, part of the steam passing through the gap M1 is condensed to become the reforming water R2, which is stayed in the lower, second section 51b. Concurrently, the reforming water R2 passing through the gap M1 together with the steam is stayed in the second section 51b. Then, the reformed gas outlet portion 12b of the CO shift converter 12 is cooled by the stayed reforming water R2, and the reforming water R2 is heated by heat exchange is vaporized into steam. In addition, the vaporization increases the internal pressure in the second section 51b. Accordingly, the steam passes through the gap M1 together with part of the reforming water R2 with the steam flowed from the first section 51a, circulates toward the exhaust pipe 42b (see FIG. 2), and exhausts to the outside of the cooling jacket 24b.

In general, a cooling coil is generally used as cooling instrument for the CO shift converter 12 and the CO remover 13, for example, in view of controllability. However, in this case, a coil-like piping for circulating the reforming water R2 has to wind and cover the CO shift converter 12 and the CO remover 13, which may make the cooling structure cumbersome and complicated.

In this respect, in the present embodiment, the cooling jackets 24a and 24b are used as the cooling instrument for the CO shift converter 12 and the CO remover 13, thereby simplifying the cooling structure. As a result, the structure of the fuel cell system can be simplified.

In the present embodiment, the CO remover 13 is provided integrally with the reformer 11 such that the reformer 11 is positioned in the tube as described above, and the reformer 11, the CO shift converter 12, the CO remover 13, and the cooling jackets 24a and 24b are integrally formed. Thus, the fuel cell system 1 can be reduced in size.

Here, as for the hydrogen shift reaction in the CO shift converter 12, while the reaction proceeds rapidly at the reformed gas inlet portion 12a, the reaction is relatively mild at the reformed gas intermediate portion 12c between the reformed gas inlet portion 12a and the reformed gas outlet portion 12b. On the other hand, an equilibrium temperature depending on the temperature of the catalyst layer is reached at the reformed gas outlet portion 12b, and it is therefore preferable that the temperature should be reduced as much as possible.

In this respect, in the present embodiment, the first and second sections 51a and 51b are divided in the cooling jacket 24b by the partitions 52 as described above, and the first and second sections 51a and 51b are arranged at the positions corresponding to the reformed gas inlet portion 12a and the reformed gas outlet portion 12b. Therefore, it is possible to store the reforming water R2 in the first and second sections 51a and 51b and to suitably cool the reformed gas inlet portion 12a and the reformed gas outlet portion 12b that particularly require cooling.

That is, at the positions corresponding to the reformed gas inlet portion 12a and the reformed gas outlet portion 12b in the cooling jacket 24b, the reforming water R2 is gathered to increase cooling capacity (the amount of heat exchange). Then, at the position corresponding to the reformed gas intermediate portion 12c, cooling capacity is relatively reduced since the hydrogen shift reaction is slow. Accordingly, it is possible to cool the CO shift converter 12 according to the characteristics specific to the CO shift converter 12, thereby to further reduce the CO concentration in the reformed gas.

In the present embodiment, the first and second sections 51a and 51 b are connected with each other through the gap M1 having a prescribed width (a prescribed size that prevents liquid from dropping under its surface tension) as described above. Thus, it is possible to stay the reforming water R2 in a liquid state in the first and second sections 51a and 51b and to allow the steam to actively circulate to the following stage through the gap M1. As a result, the reformed gas inlet portion 12a and the reformed gas outlet portion 12b can be cooled even more suitably.

The partitions 52 may be provided such that a plurality of first and second sections 51a and 51b are also defined in the cooling jacket 24a that cools the CO remover 13, in a similar manner as in the cooling jacket 24b above, as a matter of course.

Although a suitable embodiment of the present invention has been described above, the present invention is not limited to the foregoing first embodiment.

For example, the reformer 11 is not limited to the one that performs steam reforming but may be the one that performs partial oxidation reforming or autothermal reforming or may be the one using kerosene, natural gas, city gas, methanol, butane, or the like as raw fuel.

In the foregoing embodiment, valves 32 and 33 are provided. In place of them, a three-way valve may be provided. The fuel cell 4 is not limited to a solid polymer fuel cell but may be an alkali electrolyte fuel cell, a phosphoric acid fuel cell, a molten carbonate fuel cell, or a solid oxide fuel cell. The foregoing "shape like a tube" includes not only an approximately cylindrical shape but also an approximately polygonal prism shape. The approximately cylindrical shape and the approximately polygonal prism shape mean a cylindrical shape and a polygonal prism shape in a broad sense, including the one generally equal to a cylindrical shape and a polygonal prism shape, and the one including part that is a cylindrical shape and a polygonal prism shape.

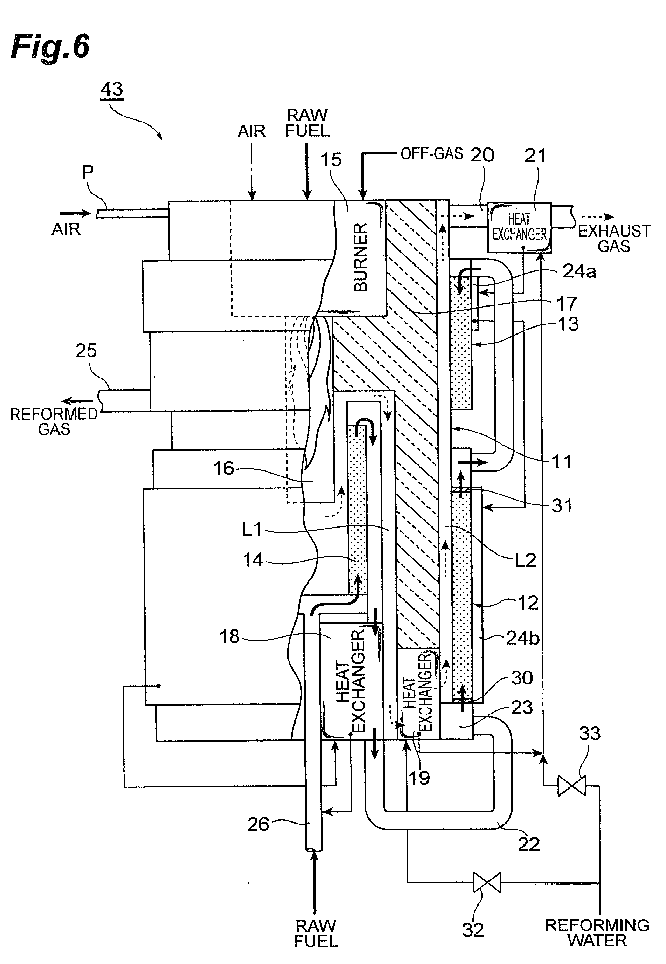

The arrangement and configuration of the FPS may be such an arrangement and configuration in that the FPS 3 above is turned upside down. Specifically, an FPS 43 configured such that the burner 15 is installed at the upper portion may be employed, for example, as shown in FIG. 6. The arrangement and configuration is not limited.

In the foregoing embodiment, both the CO shift converter 12 and the CO remover 13 are cooled by the cooling jackets 24a and 24b. However, one of the CO shift converter and the CO remover may be cooled by the cooling jacket. The configuration inside the cooling jacket is not limited to the forgoing embodiment, and a variety of configurations can be employed as long as a partition is provided to define a plurality of sections. For example, the configuration as shown below may be employed.

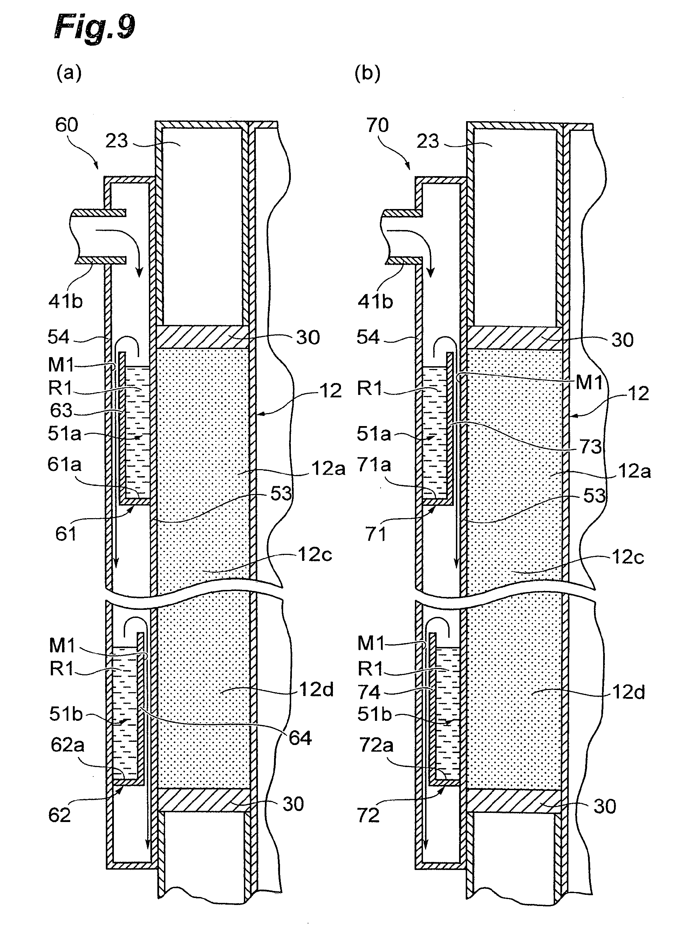

Specifically, for example, as shown in FIG 9(a), in a cooling jacket 60, an annular plate-like partition 61 positioned above is provided on the inner wall 53, and an annular plate-like partition 62 positioned below is provided on the outer wall 54. A cylindrical partition 63 is provided at a radially outside end portion of an upper surface 61 a of the partition 61, and a cylindrical partition 64 is provided at a radially inside end portion of an upper surface 62a of the partition 62. Thus, the first and second sections 51a and 51b are designed, and the gap M1 is then formed between the outer wall 54 and the partition 63 and between the inner wall 53 and the partition 64. In this case, the introduction pipe 41b protrudes into the cooling jacket 60 by a prescribed length in order to ensure that the reforming water R2 dropping from the introduction pipe 41 b is stayed in the first section 51a.

For example, as shown in FIG. 9(b), in a cooling jacket 70, an annular plate-like partition 71 positioned above is provided on the outer wall 54, and an annular plate-like partition 72 positioned below is provided on the inner wall 53. In addition, a cylindrical partition 73 is provided at a radially inside end portion of an upper surface 71a of the partition 71, and a cylindrical partition 74 is provided at a radially outside end portion of an upper surface 72a of the partition 72. Thus, the first and second sections 51a and 51b are designed, and the gap M1 is formed between the inner wall 53 and the partition 73 and between the outer wall 54 and the partition 74.

In the cooling jacket above, partitions 52, 61 to 64, and 71 to 74 are provided such that the first and second sections 51a and 51b are designed in the inside thereof. However, partitions may be provided such that three or more sections are designed.

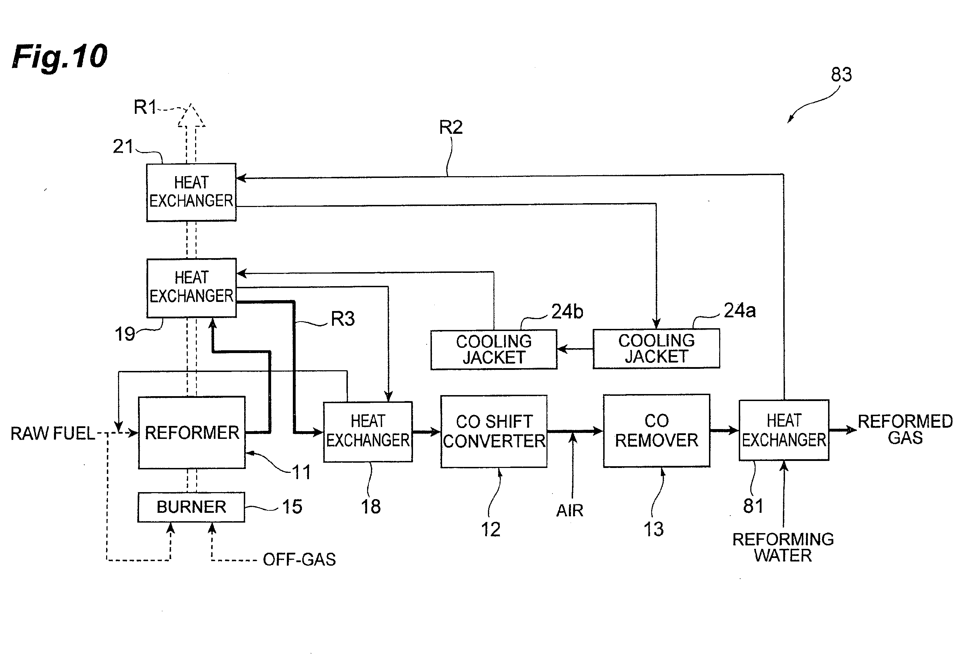

Furthermore, the process flow of the FPS is not limited to the foregoing process flow (see FIG. 4). Specifically, for example, as shown in FIG. 10, the FPS 3 may be replaced by an FPS 83 having a process flow in which circulation of the reforming water R2 is different from that in the FPS 3.

Specifically, when compared with the FPS 3, the FPS 83 further includes a heat exchanger 81 for performing heat exchange between the reforming water R2 and the reformed gas R3 but does not include valves 32 and 33. In such FPS 83, first, the reforming water R2 is heated by the reformed gas R3 in the heat exchanger 81 (the reforming water R2 cools the reformed gas R3). Then, this reforming water R2 is introduced to the heat exchanger 21 and further heated by the exhaust gas R1.

The reforming water R2 exhausted from the heat exchanger 21 circulates through the cooling jackets 24a and 24b in this order and is heated by the CO remover 13 and the CO shift converter 12 (the CO remover 13 and the CO shift converter 12 are cooled). Thereafter, the reforming water R2 is heated by the exhaust gas R1 in the heat exchanger 19 and introduced to the heat exchanger 18 to be heated by the reformed gas R3. Then, the reforming water R2 is introduced to the piping 26 and mixed into the raw fuel in a state it is finally vaporized into steam.

An embodiment not forming part of the present invention will now be described. It is noted that, in the description of the present embodiment, differences from the foregoing first embodiment will be mainly described.

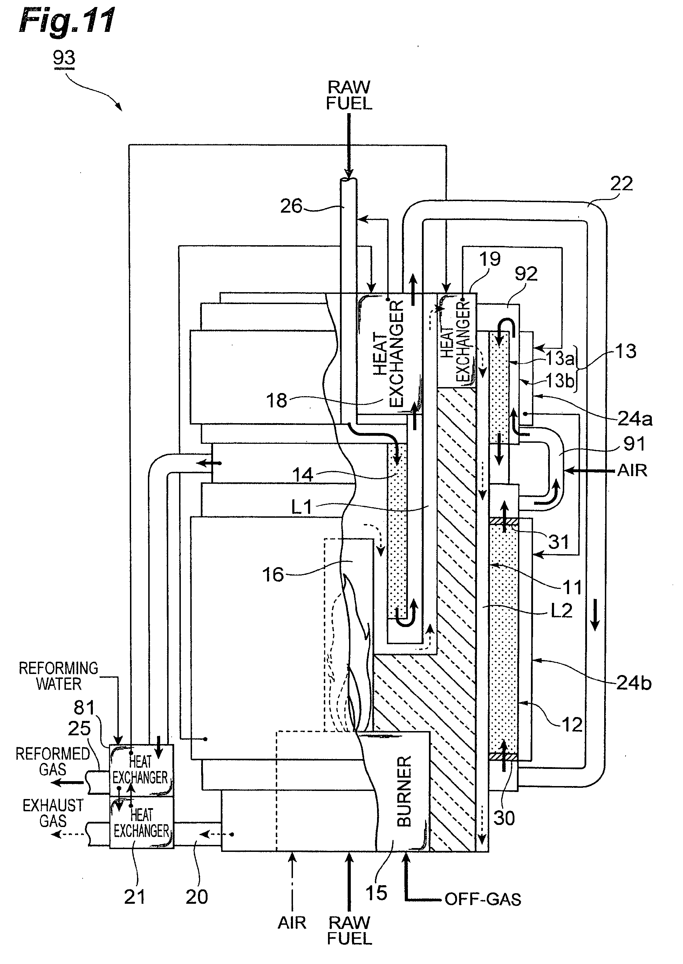

FIG. 11 is a schematic front view with the FPS partially cut away in the fuel cell system according to the embodiment not forming part of the present invention. As shown in FIG 11, in an FPS 93 in the present embodiment, the CO shift converter 12 is disposed to surround a portion extending from the axially central portion to the proximity of the lower end portion of the outer circumference of the reformer 11, and the CO remover 13 is disposed to surround a portion extending from the axially central portion to the proximity of the upper end portion of the outer circumference of the reformer 11. In other words, the CO shift converter 12 and the CO remover 13 are configured such that they are turned upside down with respect to the foregoing first embodiment. The CO shift converter 12 supplies the reformed gas having a reduced carbon monoxide concentration to the CO remover 13 through piping 91.

The CO remover 13 is configured to include a cylindrical, selective oxidation catalyst 13a and a cylindrical channel 13b disposed radially outside of the selective oxidation catalyst 13a. In this CO remover 13, the air introduced from the outside and the reformed gas from the CO shift converter 12 are supplied to the lower end portion of the channel 13b, flow upward through the channel 13b to reach a space portion 92, and are introduced to the upper end portion of the selective oxidation catalyst 13a. This CO remover 13 supplies the reformed gas, having a carbon monoxide concentration further reduced, to the fuel cell 4 at the following stage through the heat exchanger 81 which performs heat exchange between the reforming water and the reformed gas. This heat exchanger 81 is configured to be integrated with the heat exchanger 21.

The FPS 93 also includes the cooling jacket 24a for cooling the CO remover 13 and the cooling jacket 24b for cooling the CO shift converter 12. The cooling jacket 24a allows the reforming water introduced from the heat exchanger 19 to circulate inside thereof and thereafter exhausts the reforming water to the cooling jacket 24b. The cooling jacket 24b allows the reforming water introduced from the cooling jacket 24a to circulate inside thereof and thereafter exhausts the reforming water to the heat exchanger 18.

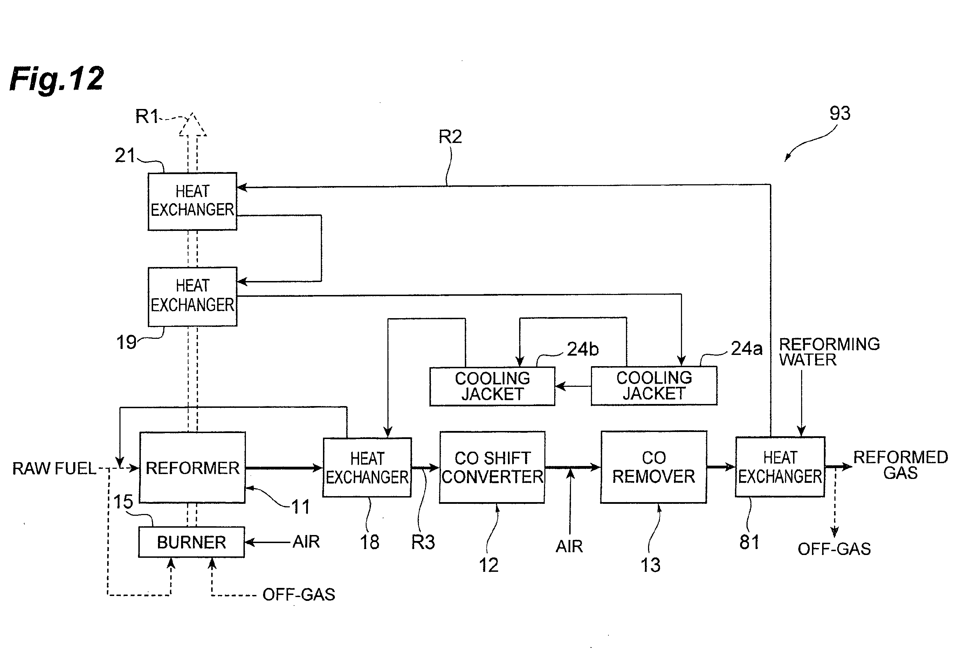

FIG. 12 is a diagram showing a process flow of the FPS in FIG 11. As shown in FIG. 11 and FIG. 12, in the FPS 93, the air and raw fuel or off-gas are supplied to the burner 15 for combustion. This combustion heats the reforming catalyst bed 14. The exhaust gas R1 from the burner 15 circulates through the channel L1 and is introduced to the heat exchanger 19 to be cooled. The exhaust gas R1 exhausted from the heat exchanger 19 circulates through the channel L2 thereby to heat the CO shift converter 12 and the CO remover 13 and increase their temperatures. Then, the exhaust gas R1 is introduced to the heat exchanger 21 through the piping 20 to be cooled and is thereafter discharged to the outside of the FPS 93.

Concurrently, the reforming water R2 is heated by the reformed gas R3 in the heat exchanger 81, and is further heated by the exhaust gas R1 in the heat exchanger 21. Then, the reforming water R2 is heated by the exhaust gas R1 in the heat exchanger 19. Here, in the heat exchanger 19, part of the channel of the reforming water R2 is in contact with the space portion 92. Therefore, the reforming water R2 is heated by the reformed gas R3 introduced to the CO remover 13 (the reformed gas R3 is cooled by the reforming water R2).

The reforming water R2 from the heat exchanger 19 circulates through the cooling jackets 24a and 24b in this order and is heated by the CO remover 13 and the CO shift converter 12 (the CO remover 13 and the CO shift converter 12 are cooled). Thereafter, the reforming water R2 is introduced to the heat exchanger 18 and heated by the reformed gas R3 and is introduced to the piping 26 and mixed into raw fuel in a state in which it is finally vaporized into steam.

In addition to the foregoing, the raw fuel is introduced from above to the reformer 11 through the piping 26, and the reforming water R2 which is vaporized is mixed into the raw fuel from the heat exchanger 18. Then, the raw fuel including the steam is steam-reformed by the reforming catalyst bed 14 heated by the burner 15 and is introduced to the heat exchanger 18 as the reformed gas R3.

The reformed gas R3 introduced to the heat exchanger 18 is cooled by the reforming water R2 and thereafter introduced to the CO shift converter 12 and the CO remover 13 in order. Thus, the reformed gas R3 has a carbon monoxide concentration reduced to a few tens of percent, for example, in the CO shift converter 12 and reacts with the air introduced from the outside in the CO remover 13, so that the carbon monoxide concentration is reduced to 10 ppm or less. Here, the reformed gas R3 introduced to the CO remover 13 is also cooled by the reforming water R2 of the heat exchanger 19 in the space portion 92 as described above.

Thereafter, the reformed gas R3 is introduced to the heat exchanger 81 and cooled by the reforming water R2 and is thereafter supplied to the fuel cell 4 at the following stage through the piping 25. Part of the reformed gas R3 supplied to the fuel cell 4 is bypassed to be used as off-gas.

In the present embodiment as described above, the effects similar to those in the foregoing first embodiment can be achieved, that is, such effects as cost reduction, size reduction, increased efficiency of the system configuration, and the simplified structure of the system for the fuel cell system can be achieved.

When compared with the foregoing first embodiment, the present embodiment further includes the heat exchanger 81, so that the amount of heat recovery is increased thereby increasing the efficiency. When compared with the foregoing first embodiment, the present embodiment does not include valves 32 and 33 and eliminates the need for bypassing the reforming water R2 by the valves 32 and 33, thereby further simplifying the structure of the system.

In the present embodiment, the heat exchangers 21 and 81 can be integrated as described above, which makes a compact configuration. The reason is as follows. In the FPS 93, the temperature is cooled/kept by the exhaust gas R1 during normal times, and the temperature is increased by the exhaust gas R1 during startup, so that the exhaust gas R1 temperature and the reformed gas R3 temperature are at the same level.

In the present embodiment, the CO shift converter 12 is arranged closer to the burner 15 (the lower side in the drawing) than the CO remover 13, in the up/down direction, and the reformed gas inlet side in the CO shift converter 12 is in proximity to the burner 15. This is because it has been found that the configuration like this can improve the durability of the CO shift converter 12.

In the heat exchanger 19 in the present embodiment, heat exchange can be made mainly between the reforming water R2 and the exhaust gas R1 as described above. However, heat exchange may be made between the reforming water R2 and the reformed gas R3 since the reformed gas R3 circulates in proximity to the heat exchanger 19 in the space portion 92. This can further improve the efficiency.

### Industrial Applicability

According to the present invention, the fuel cell system can be reduced in cost. In addition, according to the present invention, the fuel cell system can be reduced in size. According to the present invention, the system configuration can be increased in efficiency. According to the present invention, the structure of the fuel cell system can be simplified.

### Reference Signs List

1... fuel cell system, 11... reformer, 12... CO shift converter, 12a... reformed gas inlet portion (reformed gas introduction-side portion), 12b... reformed gas outlet portion (reformed gas exhaust-side portion), 13... CO remover, 15... burner, 19... heat exchanger (heat exchange unit), 19b... coil pipe (water channel), 23... reformed gas introduction portion (reformed gas flow-in channel), 24a, 24b, 60, 70... cooling jacket, 41... bypass channel, 51a, 51b... first and second sections (section), 52, 61 to 64, 71 to 74... partition, L2... channel, M1... gap, R1... exhaust gas, R2... reforming water (water), R3... reformed gas.

## Claims

1. A fuel cell system (1) comprising:
a reformer (11) for reforming raw fuel using a burner (15) to generate reformed gas;
a CO shift converter (12) shaped like a tube provided integrally with the reformer (11) such that the reformer (11) is positioned in the tube, for reducing a carbon monoxide concentration in the reformed gas generated by the reformer (11);
a CO remover (13) shaped like a tube provided integrally with the reformer (11) such that the reformer (11) is positioned in the tube, for selectively oxidizing carbon monoxide in the reformed gas to remove CO; and
a heat exchange unit (19) for performing heat exchange between exhaust gas from the burner (15) and water, wherein
at least part of a water channel (19b) in the heat exchange unit (19) is configured to be capable of heat exchange with the reformed gas introduced to the CO shift converter (12);
the CO shift converter (12) and the CO remover (13) are configured to have temperatures capable of being increased by exhaust gas from the burner (15);
a channel (L2) is provided between the reformer (11) and the CO shift converter (12) and between the reformer (11) and the CO remover (13), and
the CO shift converter (12) and the CO remover (13) are increased in temperature with the exhaust gas from the burner (15) flowed through the channel (L2),
**characterized in that**
the channel (L2) between the reformer (11) and the CO shift converter (12) and between the reformer (11) and the CO remover (13) is provided adjacent to an inner circumferential surface of the CO shift converter (12) and the CO remover (13); and
the fuel cell system further comprises a bypass channel (41) connected to the water channel (19b) to allow the water to bypass so as not to flow into the heat exchange unit (19) during system startup.

2. The fuel cell system (1) according to claim 1, wherein the CO shift converter (12) and the CO remover (13) are arranged coaxially to each other and aligned in an axial direction.

3. The fuel cell system (1) according to claim 2, wherein an outer diameter of the CO shift converter (12) and an outer diameter of the CO remover (13) are equal to each other.

4. The fuel cell system (1) according to any one of claims 1 to 3 comprising:
a cooling instrument (24a, 24b) for cooling at least one of the CO shift converter (12) and the CO remover (13), wherein
the cooling instrument (24a, 24b) is a cooling jacket (24a, 24b) provided to surround at least one of the CO shift converter (12) and the CO remover (13).

5. The fuel cell system (1) according to claim 4, wherein
a partition (52) is provided in the cooling instrument (24a, 24b) such that a plurality of sections (51 a, 51 b) are designed, and
at least one section (51a) of the plurality of sections (51 a, 51 b) is arranged at a position corresponding to an introduction-side portion and at least one section (5b) of the plurality of sections (51a, 51 b) is arranged at a position corresponding to an exhaust-side portion for the reformed gas in at least one of the CO shift converter (12) and the CO remover (13).

6. The fuel cell system (1) according to claim 5, wherein
the cooling instrument (24a, 24b) is such that a cooling medium is introduced from an upper side thereof and exhausted from a lower side thereof, and
the plurality of sections (51 a, 51 b) are arranged adjacent to each other along an up/down direction and are connected to each other through a gap (M1) having a prescribed size that prevents liquid from dropping under surface tension thereof.

## Patentansprüche

1. Brennstoffzellensystem (1), das umfasst:
einen Reformer (11), mit dem Rohbrennstoff unter Verwendung eines Brenners (15) reformiert wird, um reformiertes Gas zu erzeugen;
einen CO-Konverter (12), der röhrenartig geformt ist und mit dem Reformer (11) integral so ausgebildet ist, dass sich der Reformer (11) in der Röhre befindet, und mit dem eine Kohlenmonoxid-Konzentration in dem durch den Reformer (11) erzeugten reformierten Gas reduziert wird;
eine CO-Entfernungseinrichtung (13), die röhrenartig geformt und mit dem Reformer (11) integral so ausgebildet ist, dass sich der Reformer (11) in der Röhre befindet, und mit der Kohlenmonoxid in dem reformierten Gas selektiv oxidiert wird, um CO zu entfernen; sowie eine Wärmetauscheinheit (19) zum Durchführen von Wärmeaustausch zwischen Abgas von dem Brenner (15) und Wasser, wobei
wenigstens ein Teil eines Wasserkanals (19b) in der Wärmetauscheinheit (19) so eingerichtet ist, dass er Wärmeaustausch mit dem in den CO-Konverter (12) eingeleiteten reformierten Gas durchführen kann;
der CO-Konverter (12) und die CO-Entfernungseinrichtung (13) so eingerichtet sind, dass ihre Temperatur jeweils durch Abgas von dem Brenner (15) erhöht werden kann;
ein Kanal (L2) zwischen dem Reformer (11) und dem CO-Konverter (12) sowie zwischen dem Reformer (11) und der CO-Entfernungseinrichtung (13) vorhanden ist, und
die Temperatur des CO-Konverters (12) und der CO-Entfernungseinrichtung (13) jeweils mit dem durch den Kanal (L2) geleiteten Abgas von dem Brenner (15) erhöht wird,
**dadurch gekennzeichnet, dass**
der Kanal (L2) zwischen dem Reformer (11) und dem CO-Konverter (12) sowie zwischen dem Reformer (11) und der CO-Entfernungseinrichtung (13) an eine Innenumfangsfläche des CO-Konverters (12) und der CO-Entfernungseinrichtung (13) angrenzt; und
das Brennstoffzellensystem des Weiteren einen Umleitungskanal (41) umfasst, der mit dem Wasserkanal (19b) verbunden ist, um Umleiten des Wassers zuzulassen, so dass es beim Hochfahren des Systems nicht in die Wärmetauscheinheit (19) fließt.

2. Brennstoffzellensystem (1) nach Anspruch 1, wobei der CO-Konverter (12) und die CO-Entfernungseinrichtung (13) koaxial zueinander angeordnet und in einer axialen Richtung ausgerichtet sind.

3. Brennstoffzellensystem (1) nach Anspruch 2, wobei ein Außendurchmesser des CO-Konverters (12) und ein Außendurchmesser der CO-Entfernungseinrichtung (13) einander gleich sind.

4. Brennstoffzellensystem (1) nach einem der Ansprüche 1 bis 3, das umfasst:
eine Kühlvorrichtung (24a, 24b) zum Kühlen des CO-Konverters (12) oder/und der CO-Entfernungseinrichtung (13), wobei
die Kühlvorrichtung (24a, 24b) ein Kühlmantel (24a, 24b) ist, der den CO-Konverter (12) oder/und die CO-Entfernungseinrichtung (13) umgibt.

5. Brennstoffzellensystem (1) nach Anspruch 4, wobei
eine Trennwand (52) in der Kühlvorrichtung (24a, 24b) vorhanden ist, so dass eine Vielzahl von Teilabschnitten (51 a, 51 b) hergestellt wird, und
in dem CO-Konverter (12) oder/und der CO-Entfernungseinrichtung (13) wenigstens ein Teilabschnitt (51 a) der Vielzahl von Teilabschnitten (51 a, 51 b) an einer Position angeordnet ist, die einem Einleitseiten-Abschnitt entspricht, und wenigstens ein Teilabschnitt (51 b) der Vielzahl von Teilabschnitten (51a, 51b) an einer Position angeordnet ist, die einem Ausleitseiten-Abschnitt für das reformierte Gas entspricht.

6. Brennstoffzellensystem (1) nach Anspruch 5, wobei
die Kühlvorrichtung (24a, 24b) so eingerichtet ist, dass ein Kühlmedium über eine obere Seite derselben eingeleitet wird und über eine untere Seite derselben abgeleitet wird, und die Vielzahl von Teilabschnitten (51a, 51b) in einer vertikalen Richtung aneinandergrenzend angeordnet sind, und über einen Zwischenraum (M1) miteinander verbunden sind, der eine vorgeschriebene Größe hat, die verhindert, dass Flüssigkeit unter Oberflächenspannung derselben abtropft.

## Revendications

1. Système de pile à combustible (1) comprenant :
un reformeur (11) pour reformer un combustible brut en utilisant un brûleur (15) pour générer du gaz reformé ;
un convertisseur de CO à vapeur d'eau (12) conformé comme un tube réalisé de manière intégrée avec le reformeur (11) de telle sorte que le reformeur (11) est positionné dans le tube afin de réduire une concentration en monoxyde de carbone dans le gaz reformé généré par le reformeur (11) ;
un éliminateur de CO (13) conformé comme un tube réalisé de manière intégrée avec le reformeur (11) de telle sorte que le reformeur (11) est positionné dans le tube, pour oxyder sélectivement le monoxyde de carbone en gaz reformé afin d'éliminer le CO ; et
une unité d'échange de chaleur (19) pour mettre en oeuvre un échange de chaleur entre le gaz d'échappement provenant du brûleur (15) et de l'eau, dans lequel
au moins une partie d'un canal d'eau (19b) dans l'unité d'échange de chaleur (19) est configurée pour être capable d'un échange de chaleur avec le gaz reformé introduit dans le convertisseur de CO à vapeur d'eau (12) ;
le convertisseur de CO à vapeur d'eau (12) et l'éliminateur de CO (13) sont.configurés pour que leur température puisse être augmentée par le gaz d'échappement provenant du brûleur (15) ;
un canal (L2) est pourvu entre le reformeur (11) et le convertisseur de CO à vapeur d'eau (12) et entre le reformeur (11) et l'éliminateur de CO (13), et
la température du convertisseur de CO à vapeur d'eau (12) et la température de l'éliminateur de CO (13) augmentent du fait de l'écoulement du gaz d'échappement provenant du brûleur (15) à travers le canal (L2),
**caractérisé en ce que**
le canal (L2) entre le reformeur (11) et le convertisseur de CO à vapeur d'eau (12) et entre le reformeur (11) et l'éliminateur de CO (13) est adjacent à une surface circonférentielle interne du convertisseur de CO à vapeur d'eau (12) et de l'éliminateur de CO (13) ; et
le système de pile à combustible comprend en outre un canal de dérivation (41) connecté au canal d'eau (19b) pour permettre une dérivation de l'eau de manière à ce qu'elle ne passe pas dans l'unité d'échange de chaleur (19) durant le démarrage du système.

2. Système de pile à combustible (1) selon la revendication 1, dans lequel le convertisseur de CO à vapeur d'eau (12) et l'éliminateur de CO (13) sont agencés coaxialement l'un par rapport à l'autre et alignés en direction axiale.

3. Système de pile à combustible (1) selon là revendication 2, dans lequel un diamètre externe du convertisseur de CO à vapeur d'eau (12) et un diamètre externe de l'éliminateur de CO (13) sont égaux entre eux.

4. Système de pile à combustible (1) selon l'une quelconque des revendications 1 à 3, comprenant :
un instrument de refroidissement (24a, 24b) pour refroidir au moins un élément parmi le convertisseur de CO à vapeur d'eau (12) et l'éliminateur de CO (13), dans lequel
l'instrument de refroidissement (24a, 24b) se trouve dans une chemise de refroidissement (24a, 24b) pourvue pour entourer au moins un élément parmi le convertisseur de CO à vapeur d'eau (12) et l'éliminateur de CO (13).

5. Système de pile à combustible (1) selon la revendication 4, dans lequel
une partition (52) est pourvue dans l'instrument de refroidissement (24a, 24b) de telle manière qu'une pluralité de sections (51a, 51b) sont désignées, et
au moins une section (51a) de la pluralité de sections (51a, 51b) est agencée à une position correspondant à une partie côté introduction et au moins une section (5b) de la pluralité de sections (51a, 51b) est agencée à une position correspondant à une partie côté échappement pour le gaz reformé dans au moins un élément parmi le convertisseur de CO à vapeur d'eau (12) et l'éliminateur de CO (13).

6. Système de pile à combustible (1) selon la revendication 5, dans lequel
l'instrument de refroidissement (24a, 24b) est tel qu'un fluide de refroidissement est introduit par un côté supérieur et s'échappe par un côté inférieur dudit instrument, et
les sections de la pluralité de sections (51a, 51b) sont adjacentes entre elles selon une direction haut/bas et sont connectées entre elles via un intervalle (M1) de taille prescrite qui empêche que du liquide ne chute du fait de sa tension superficielle.
